# EUROPEAN PATENT APPLICATION

(11) **EP 3 961 652 A1**
(43) Date of publication of application: **02.03.2022**
(21) Application number: 20933527.2
(22) Date of filing: 02.11.2020
(51) Int. Cl.: G21C 3/62

(54) **NUCLEAR FUEL PELLET**

(30) Priority: 27.04.2020 RU 2020116142
(71) Applicant: Joint-Stock Company "TVEL", Moscow 115409 (RU)
(72) Inventor: NOVIKOV, Vladimir Vladimirovich, Moscow, 123458 (RU); MIKHEEV, Evgeniy Nikolaevich, Moscow, 127299 (RU); KUZNETSOV, Vladimir Ivanovich, Moscow, 123098 (RU); LYSIKOV, Aleksandr Vladimirovich, Moscow, 111674 (RU); SAMOKHVALOV, Anatolii Nikolaevich, Moscow, 123103 (RU); IAROPOLOV, Iurii Leonidovich, Moscow, 123182 (RU); SERGIENKO, Ivan Romanovich, g. Novomoskovsk, 301664 (RU)
(86) International application number: PCT/RU2020/000579
(87) International publication number: WO 2021/221533

(57) **Abstract**

The invention relates a design for pelletized fuel for light-water reactor fuel cells. A pellet is configured in the shape of a cylinder having outer beveled edges and a central aperture running along the longitudinal axis, wherein an outer beveled edge lies at an angle of 20-30° to the plane of the surface of an end face, and the ratio of the width of a beveled edge to the diameter of the pellet is from 0.02 to 0.15. The size of isolated defects in the external appearance of the pellet is not more than 1.3% of the area of the external surface of the pellet for defects in an end surface, not more than 1.0% for defects in the lateral cylindrical surface, and not more than 0.7% for defects adjacent the outer limit of a beveled edge. The average uranium dioxide grain size is from 6 to 35 µm. The pellet can additionally contain from 0.002 to 0.020 mass% aluminium and from 0.001 to 0.010 mass% silicon, in the form of oxides distributed uniformly throughout the entire volume of the pellet. The technical result is that of reducing the tensile hoop stresses on fuel element cladding by reducing the size of isolated defects in the external appearance of the pellet, as well as reducing the emission of gaseous fission products by including additives that increase grain size.

## Description

### TECHNICAL FIELD

The invention relates to the field of nuclear industry, in particular - to the design of pelleted fuel for fuel elements of light water reactors, for example, WWER reactors (water-water energetic reactor), and can be used for fuel elements of reactors operating in long-term fuel cycles, and in modes of reactor power maneuvering.

At present, the requirements to nuclear fuel of modern nuclear reactors are being continuously toughened. In particular, such fuel shall ensure safe operation of the reactor in long-term fuel cycles, in modes of reactor power maneuvering, and preserve its performance in operation at high burnup levels.

### BACKGROUND

There is a pellet (RU 2 376 665, IPC G21C 3/62, publ. of 2009), containing aluminum oxide and silicon oxide, evenly distributed throughout the entire pellet volume. Moreover, in relation to uranium, the content of aluminum is 0.005 to 0.03% wt., silicon - 0.003 to 0.02% wt., weight ratio of aluminum to silicon is 1.5 to 4, the grain size of uranium dioxide varies within 20 to 45 µm.

Disadvantage of this known pellet is a high boundary by the grain size magnitude, that reduces strength characteristics of fuel and increases the pellet spalling capacity.

There is a nuclear fuel pellet (RU 2 193 242, IPC G21C 3/62, C01G 43/025, publ. of 2002), made of uranium dioxide with additives of aluminum 0.03 to 0.10% wt. and silicon 0.01 to 0.05% wt. as oxides, distributed along the boundaries of uranium dioxide grains. In specific embodiments, this pellet can also contain additives of ferric oxide, partially distributed along the grain boundaries and partially as a solid solution in uranium dioxide, and also additives of niobium oxide distributed as a solid solution in uranium dioxide. In specific embodiments the pellet made of uranium dioxide can have a grain size 10 to 20 µm, or 12 to 30 µm. In specific embodiments the pellet can contain an additive of gadolinium oxide 0.3 to 10.0% wt., or erbium oxide 0.3 to 0.8% wt.

Disadvantage of this known pellet is a high content of alloying elements exceeding the applicable requirements, that increases the Total Boron Equivalent (TBE) of the fuel; and a small grain size, that reduces the capacity to retain the Gaseous Fission Products (GFP) and prevents reaching the high burnup.

There is a pellet (RU 2 339 094, IPC G21C 3/62, publ. of 2007) of nuclear uranium-erbium ceramic fuel containing 0.36 to 0.64% wt. of erbium, with additive of aluminum oxide powder (Al₂O₃) and powder of one of the following oxides: TiO₂, Nb₂O₅, SiO₂, CaO, MgO; or just with a single additive of mineral aluminum silicates: kaolin, metakaolin, halloysite, montmorillonite, vermiculite.

Disadvantage of this known pellet is a high content of alloying elements - up to 0.10% wt. per each element, that exceeds the applicable requirements and increases the fuel TBE. In one of the embodiments the pellet grain size reaches 50 µm, that reduces strength characteristics of fuel and increases the pellet spalling capacity.

There is a pellet (RU 2 268 507, IPC G21C 3/62, 21/00, publ. of 2005) of nuclear fuel made of uranium dioxide or uranium dioxide with additive of gadolinium oxide in the amount of 2.0-8.0% wt., with additive of aluminum oxide powder (Al₂O₃) and powder of one of the following oxides: TiO₂, Nb₂O₅, SiO₂, CaO, MgO, BeO, Na₂O, P₂O₅ in the amount ensuring the content of aluminum and oxide forming element from the specified range within 20-500 ppm pf each element in relation to uranium, at ratio: 60-85% Al, the rest is oxide forming element from the specified range.

Disadvantage of this known pellet is a high content of alloying elements, that exceeds the applicable requirements and increases the fuel TBE. In one of the embodiments the pellet grain size reaches 100 µm, that reduces strength characteristics of fuel and increases the pellet spalling capacity.

The closest analog is the known pellet (RU 1 669 308, IPC G21C3/28.3/16, publ. of 1994). Its design, in order to improve the quality due to increase in end face strength, and due to reduction of thermal deformations of pellets and their thermomechanical interaction with the cladding, conical protrusions with flat areas are made with height hₚᵣ = (0.005-0.009)H; where H - pellet height equal to 0.25-2.0 of its diameter; and conical cavities shaped as hemispheres or with flat areas are made with height h_{cav} = (1.1-2.5) (h_{o.f.} + hₚᵣ); where h_{o.f.} - height of the outer face.

Disadvantage of this known pellet is reduction in uranium content due to the conical protrusions and cavities, increase in circumferential stresses on the inner surface of the fuel element cladding, in places of contact of the fuel column adjacent pellets due to increased total height of pellet faces and protrusions.

### DISCLOSURE OF THE INVENTION

The objective of the claimed invention is to ensure safe operation of fuel elements with fuel pellets in normal operation modes, in case of disturbance in normal operation, and in the reactor operation maneuvering modes, and also to increase the fuel burnup range.

The technical result is to reduce tension circumferential stresses in fuel elements cladding due to reduction in the size of individual defects of the pellet appearance, and also to reduce the emissions of gaseous fission products due to introduction of additives increasing the grain size.

The technical result is achieved due to the fact, that this nuclear fuel pellet is made as a cylinder with outer faces and a central aperture along the longitudinal axis. Moreover, the outer face connecting the side cylindrical surface with the end face area passes at the α angle to the surface plane of end face area, equal to 20-30°, and the ratio of the face width to the pellet diameter is *l_{f}*/*D* = 0.02-0.15. Therewith, the size of individual defects of the pellet appearance 1.3% as maximum of the pellet outer surface area for defects of end face surface; 1.0% as maximum of the pellet outer surface area for defects of side cylindrical surface; and 0.7% as maximum of the pellet outer surface area for defects adjacent to the outer boundary of the face. Besides, the average grain size of uranium dioxide is 6 to 35 µm.

In a specific embodiment of the nuclear fuel pellet, it contains aluminum - 0.002 to 0.020% wt., and silicon - 0.001 to 0.010% wt. as oxides, evenly distributed throughout the entire pellet volume.

In another specific embodiment of the nuclear fuel pellet, it contains 0.3 to 10.0% wt. gadolinium, which is in the form of solid solution with uranium dioxide evenly distributed throughout the entire pellet volume.

In another specific embodiment of the nuclear fuel pellet, it contains 0.3 to 2.5% wt. erbium, which is in the form of solid solution with uranium dioxide evenly distributed throughout the entire pellet volume.

### INVENTION EMBODIMENT

Fig. 1 shows a sketch of the claimed nuclear fuel pellet.
Fig. 2 shows a sketch of characteristic defect types of the nuclear fuel pellet appearance.
Fig. 3 shows a diagram of maximum circumferential stresses on the outer side of the fuel element cladding, depending on the defect (spalling) area on the fuel pellet, adjacent to the face outer boundary.

Ensuring the safe operation of fuel elements with fuel pellets in normal operation modes, in case of disturbance in normal operation, and in the reactor operation maneuvering modes, is achieved due to reduction in tension circumferential stresses in fuel elements cladding, obtained due to reduction in the size of individual defects of the pellet appearance. Reduction of the defect size, reduction of pellet damage during manufacture and of spalling capacity in the course of loading and transporting are achieved due to increase in strength of briquettes and pellets as consequence of reduction in residual stresses on briquettes thanks to optimization of the pellet geometrical parameters, in particular - outer faces; and to optimization of aluminum and silicon additive content in the nuclear fuel pellets, and the grain size range. Increase in the fuel burnup range is ensured by reduction in emissions of gaseous fission products due to introduction of additives increasing the grain size to the nuclear fuel pellets.

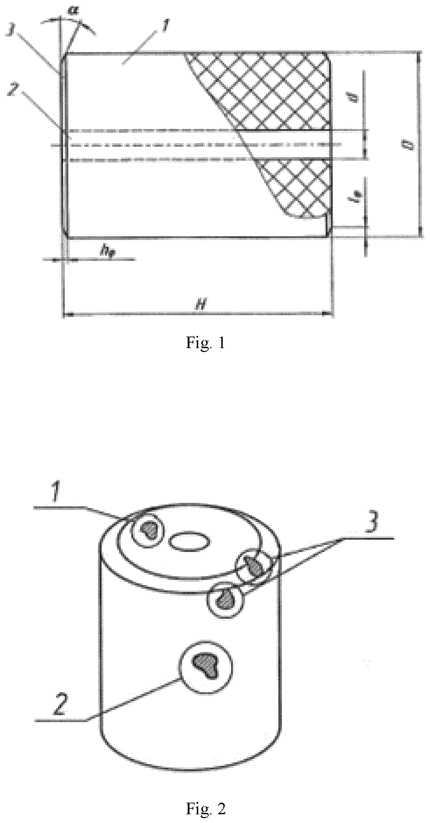

The nuclear fuel pellet (Fig. 1) is made in the shape of cylinder 1 with a central aperture 2 along the longitudinal axis, and outer faces 3. Moreover, the outer face connecting the side cylindrical surface with the end face area passes at the *α* angle to the surface plane of end face area, equal to 20-30°, and the ratio of the face width to the pellet diameter is *l_{f}*/*D* = 0.02-0.15. Ensuring the safe operation of the improved WWER fuel is achieved due to increase of strength characteristics, reduction in spalling number and reduction in chip generation in the fuel element in the course of loading and transporting. This result is achieved due to reduction in residual stresses in the fuel pellet, in particular - in the areas close to the outer faces; this contributes the increase in strength of briquettes and sintered pellets and, consequently, reduction in pellet damage during their manufacture. To reduce residual stresses in the fuel pellet, a mathematical model for pressing was developed [Mathematical Simulation of the Procedure for Uranium Dioxide Powder Pressing when Manufacturing Nuclear Fuel Pellets, O.A. Bakhteev, A.V. Lysikov, E.N. Mikheev, A.N. Zhiganov, A.D. Istomin, A.A. Matolygin, M.D. Noskov, A.A. Cheglokov // Vestnik natsional'nogo issledovatel'skogo yadernogo universiteta "MIFI," Edition: IAPC "Nauka/Interperiodika" (Moscow), 2014, vol. 3, No. 6, p. 618]. It was used to carry out multiple computational simulation experiments on a set of experimental data of pellet pressing. To minimize the residual stress tensor component, geometric parameters of the pellets were optimized under modern industrial conditions of manufacture, that allowed for increase in strength of briquettes and pellets, and, as a consequence, for reduction the number and the size of defects formed during the manufacture of fuel pellets. Optimal geometric parameters for reducing the spalling capacity of nuclear fuel pellets: outer face angle equal to 20-30° relative to the surface plane of end face area, and ratio of the face width to the pellet diameter equal to *l_{f}*/*D* = 0.02-0.15.

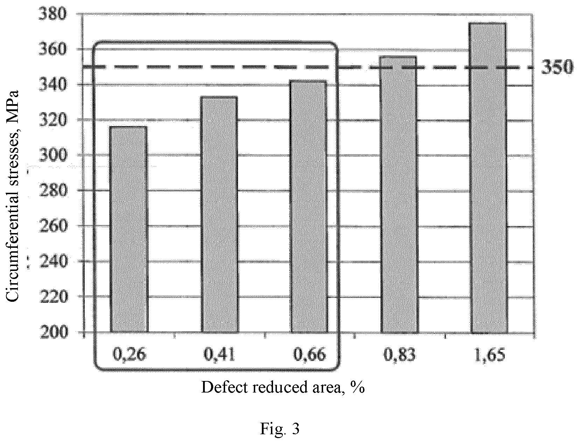

In the practice of reactor studies and operation, there are cases of fuel element failure due to cladding leakage, which occurred in the places of the fuel pellet defects revealed in the course of pellet manufacture, fuel element loading, transporting or during operation [Krupkin A., Kuznetsov V., Nesterov B, Novikov V. Simulation of ramp tests on WWER-1000 fuel rod without a central hole in ANSYS software // In Proc.: 11 th International Conference on WWER Fuel Performance, Modeling and Experimental Support, Varna, Bulgaria, 2015. - p.p.416-421]. Studies of stress strain behavior of the cladding using computational simulation methods under conditions of power surge and in case of a pellet spalling, confirmed a probability of crack formation in the cladding according to the stress corrosion cracking mechanism. Works were carried out to determine the magnitude of stress increment on the fuel element cladding inner surface at various geometrical parameters of the fuel pellet defect. As shown by the diagram specified (Fig. 3), SC1 stress criterion of the fuel element cladding for short-term modes (magnitude of 350 MPa) limits the allowable size of individual defect adjacent to the face outer boundary of the nuclear fuel pellet, by the magnitude corresponding to 0.7% of the total pellet surface area. Based on this data, the requirements to maximum allowable area of individual defects on the fuel pellet surface are established; this area permits to justify the fuel element cladding strength in transient modes of reactor operation. Based on the statistical probability of combining two defects adjacent to the face outer boundary, for two adjacent pellets from the end face and the side surfaces, the maximum area of individual defects for the end face and the side cylindrical surfaces is calculated as an equivalent area of two combined defects.

Increase in safety during operation in maneuvering modes, in normal operation modes and in case of disturbance in normal operation is achieved due to reduction in the allowable size of individual defects of the pellet appearance (Fig. 2). If compared to the applicable technical requirements imposed to the pellets for WWER reactors, the area of individual defect 1 of the end face surface is reduced from 1.7% to 1.3% of the pellet outer surface area. The area of individual defect 2 of the side cylindrical surface is reduced from 2.0% to 1.0% of the pellet outer surface area. The area of individual defect 3 adjacent to the face outer boundary is reduced from 1.7% to 0.7% of the pellet outer surface area.

Increase in the fuel burnup range is achieved, generally, due to the use of fuel with increased grain size. The applicable requirements suppose an average grain size for standard fuel pellets made of uranium dioxide with no microadditives 10-25 µm; for pellets with microadditives of aluminum and silicon - 25 µm as minimum; for pellets with gadolinium oxide additive - 6 to 25 µm. The optimal grain size for the claimed pellet, depending on the additives used, is 6 to 35 µm. Reduction in GFP emissions is ensured due to introduction of aluminum and silicon additives, increasing the grain size up to 25-35 µm [A.V. Medvedev, J.K. Bibilashvili, O.V. Milovanov, S.M. Bogatyr Influencing and optimizing fuel pellet parameters for achievement of extended burnup // IAEA-TECDOC-1036 In Proc.: Technical Committee meeting, Tokyo, Japan, 1996. - p.p. 257-266.]. Thanks to this, GFP are retained in intragranular pores, and thereby GFP emission to the bonded pores located along the grain boundaries is reduced, which slows down generation of rim-structure. Increase in the grain size exceeding 35 µm, firstly, leads to reduction in fuel plasticity and decrease in creep rate, that is inversely proportional to the square of grain size; finally, it increases the fuel interaction with cladding. Secondly, increase in the grain size exceeding 35 µm results in increase of pellet spalling capacity when loading and transporting fuel elements, due to increase of frailty as a consequence of change in crack propagation mechanism, from intergranular to trans-granular [Crack Viscosity of WWER and PWR Fuel Pellets Made of Uranium Dioxide with Different Grain Size. Novikov V.V., Sivov R.B., Mikheev E.N., Fedotov A.V. // Atomnaya energiya, 2015, vol. 118, issue 2, p. 91-96.], and change in the porosity nature.

Increase in safety during operation at increased fuel burnup range is achieved due to the fact, that in a specific embodiment of the nuclear fuel pellet it contains aluminum - 0.002 to 0.020% wt., and silicon - 0.001 to 0.010% wt. as oxides, evenly distributed throughout the entire pellet volume; and the grain size of uranium dioxide is 25 to 35 µm. This range of grain size, on the one hand, contributes efficient reduction in GFP emissions; on the other hand, it limits the increase in spalling capacity and permits to minimize the amount of additives introduced in order to activate the increase in grain size when manufacturing pellets. Moreover, in other specific embodiments of the nuclear fuel pellet, it contains 0.3 to 10.0% wt. gadolinium, or 0.3 to 2.5% wt. erbium, which are in the form of solid solution with uranium dioxide evenly distributed throughout the entire pellet volume; and the grain size is 6 to 25 µm.

### INDUSTRIAL APPLICABILITY

The nuclear fuel pellet described is manufactured using a well-known method, using ordinary means on standard equipment. The fuel shall have a specific phase composition, average grain size and other standard parameters.

Technology for manufacture of nuclear fuel pellets is as follows. In a mixer, in particular, two- or three-plane gravity type mixer, a multicomponent mixture is prepared using uranium dioxide (UO₂), concentrated uranium oxide (U₃O₈), porophore, microadditives of silicon and aluminum as SiO₂ and Al₂O₃ or Al(OH)₃. Then this mixture is subject to granulation, after that a plasticizing agent is introduced to the granulate using a ligature, it is mixed in the mixer and screened through a sieve. Then pellets are pressed, put into a molybdenum boat and subject to high-temperature sintering. After that pellets are polished using a centerless grinding machine and automatically put to the pallets.

When manufacturing pellets with additives of gadolinium or erbium, the stage of preparation of powder homogenized mixture can additionally comprise ligature mixing of components with further processing in a mixer and/or vibrating mill.

Therefore, a design of nuclear fuel pellet is developed, which ensures safe operation of fuel elements in normal operation modes, in case of disturbance in normal operation, and in the reactor operation maneuvering modes, due to reduction in the size of individual defects of the pellet appearance, and decrease in tension circumferential stresses in the cladding of fuel elements, and also due to increase the fuel burnup range thanks to introduction of additives increasing the grain size, and reduction in emissions of gaseous fission products.

## Claims

1. A nuclear fuel pellet made of uranium dioxide for nuclear reactors of WWER type configured in the shape of a cylinder having outer beveled edges and a central aperture running along the longitudinal axis, wherein an outer beveled edge lies at an angle α of 20-30° to the plane of the surface of an end face and the ratio of the width of a beveled edge to the diameter of the pellet If/D is from 0.02 to 0.15, wherein the size of isolated defects in the external appearance of the pellet is not more than 1.3% of the area of the external surface of the pellet for defects in an end surface, not more than 1.0% for defects in the lateral cylindrical surface, and not more than 0.7% for defects adjacent the outer limit of a beveled edge, wherein the average uranium dioxide grain size is from 6 to 35 µm.

2. The pellet according to claim 1, wherein the pellet comprises from 0.002 to 0.020 wt.% aluminium and from 0.001 to 0.010 wt.% silicon, in the form of oxides distributed uniformly throughout the entire volume of the pellet.

3. The pellet according to claim 1, wherein the pellet comprises from 0.3 to 10.0 wt.% gadolinium oxide in the form of solid solution with uranium dioxide distributed uniformly throughout the entire volume of the pellet.

4. The pellet according to claim 1, wherein the pellet comprises from 0.3 to 2.5% wt. erbium oxide in the form of solid solution with uranium dioxide distributed uniformly throughout the entire volume of the pellet.
